# DEMANDE DE BREVET EUROPEEN

(11) **EP 1 149 758 A1**
(43) Date de publication de la demande: **31.10.2001**
(21) Numéro de dépôt: 01401015.1
(22) Date de dépôt: 20.04.2001
(51) Int. Cl.: B62M 3/04

(54) **Pèdalier de bicyclette à impulsions**

(30) Priorité: 25.04.2000 FR 0005338
(71) Demandeur: Peyre, Henri, 58270 St Benin d'Azy (FR)
(72) Inventeur: Peyre, Henri, 58270 St Benin d'Azy (FR)

(57) **Abrégé**

Pédalier de bicyclette conçu pour passer facilement le point mort haut quand celui-ci devient un handicap au pédalage.

L'invention concerne un pédalier de bicyclette monté sur l'axe (2) du boîtier de pédalier (3) de façon connue muni de plateaux traditionnels (4), apte à passer le point mort haut quand celui-ci est marqué, par le déplacement de la partie haute (14), de la manivelle,(5) divisée en deux parties (14, 19), longitudinalement vers l'axe (2) du pédalier et angulairement vers l'avant, en accélération . En cas de pédalage fluide, non heurté, sans à-coups, le pédalier se comporte comme un pédalier traditionnel à manivelles rigides.

Chaque manivelle renferme un système élastique de maintient et de remise en place, comprenant un piston (25), un ressort (26), une vis (27),qui agit entre la partie haute (14) et la partie basse (19), par le truchement des rouleaux (18, 20) et de la lumière (9)

Le système peut être neutralisé en bloquant la vis (27) de réglage de la dureté du ressort de rappel (26).

Ce système peut être utilisé pour la propulsion de cycles ou la commande de treuils ou de machines nécessitant l'emploi d'une ou deux manivelles.

## Description

L'invention concerne un pédalier de bicyclette dont les manivelles sont particulièrement agencées pour passer facilement le point mort haut, quand il devient un handicap au pédalage, tout en apportant à celui-ci un surcroît d'énergie.

L'invention décrite comme une amélioration au pédalier de bicyclette peut également être utilisée pour tout autre système commandé par une ou deux manivelles comme les treuils, les commandes manuelles de machines.

Les pédaliers actuels ont un bon comportement quand le cycliste roule sur terrain dur, plat ou de faible pente. En effet le point mort haut se passe facilement grâce à la vitesse de pédalage et à l'énergie cinétique de l'ensemble en mouvement. Une gêne apparaît cependant au passage du point mort quand le cycliste démarre, lorsque le terrain devient en pente et sur un sol meuble notamment dans la pratique du V.T.T. Dans ces conditions le point mort haut, quand la manivelle est verticale, est difficile à passer, la force appliquée à la pédale en position haute passant par l'axe du pédalier..

De nombreux brevets décrivent des améliorations aux pédaliers classiques pour supprimer l'inconvénient du passage du point mort. Notamment des systèmes qui décalent l'axe de rotation des plateaux et celui des manivelles, les manivelles étant libres l'une par rapport à l'autre, chaque manivelle étant reliée au plateau par des biellettes ou des coulisseaux. Dans ces systèmes les manivelles ne se trouvent jamais dans le même prolongement vertical. Il existe un décalage angulaire qui fait que les points morts haut et bas ne sont jamais alignés et que chaque manivelle est tour à tour dans une phase active quand l'autre manivelle passe un point mort. Cette cinématique est permanente. Cette solution revendiquée par plusieurs brevets, reprenant des réalisations techniques différentes a les inconvénients suivants :nombreuses pièces et axes supplémentaires qui apportent des frottements préjudiciables au rendement, pédalier plus lourd, problèmes d'étanchéité et de prise de jeu, et surtout prix de revient très élevé.

D'autres brevets décrivent des pédaliers qui ont un ou plusieurs plateaux montés élastiquement par rapport aux manivelles par un système de ressorts élastomère ou de ressorts métalliques de compression ou de traction. Ces systèmes demandent un montage de plateaux spéciaux et très vite à l'usage apparaissent des jeux et des coincements, le système dans les plateaux est par ailleurs exposé à la salissure.

Il existe également des systèmes qui possèdent des excentriques aux extrémités des manivelles pour le montage des pédales. Ils ont pour inconvénients le montage de roulements dans les manivelles pour recevoir l'axe des pédales, l'écartement des pédales l'une de l'autre par rapport à un pédalier normal et apport peu sensible pour le passage du point mort.

L'invention présente se propose d'apporter une solution nouvelle au passage du point mort de la manivelle active en évitant les inconvénients décrits précédemment. Il est expliqué un système de pédalier dont la partie centrale, boîtier de pédalier, étoiles et plateaux sont traditionnels, seules les manivelles sont particulières.

Chaque manivelle est divisée en deux parties. La partie haute qui porte la pédale pouvant se déplacer axialement de quelques millimètres et angulairement de plusieurs degrés vers l'axe du pédalier à grande vitesse quand la force appliquée à la pédale par le pied du cycliste est proche d'une perpendiculaire à l'axe du pédalier. Ces cas de figure se produisent lors d'un démarrage, quand le terrain devient pentu ou le sol meuble. Lors d'un pédalage à grande vitesse, ou à faible vitesse sans effort ni à-coups le système n'est pas activé. Quand les manivelles se situent dans un plan parallèle au sol le système est verrouillé, s'il n'a pas été activé avant au passage du point mort haut, et les manivelles se comportent comme des manivelles rigides.un pédalage lancé n'entraîne pas le déplacement des extrémités des manivelles, la vitesse de rotation des manivelles ne donnant pas un marquage trop important du point mort pour déplacer la partie mobile haute à l'encontre d'un ressort de rappel. Les parties hautes des manivelles en forme de chape portent deux rouleaux, les parties basses ont leur extrémité en forme de plat rectangulaire usiné pour recevoir la chape de la partie haute coulissante sans jeu. Dans l'épaisseur de la partie plate des bas de manivelles est taillée une lumière destinée à recevoir des rouleaux portés par la partie haute. Cette lumière est conformée de façon telle que quand le ressort de rappel éloigne les parties haute et basse l'une de l'autre, les rouleaux se placent entre les parois parallèles ajustées à leur diamètre et rendent solidaires les deux parties de la manivelle devenue rigide. Par contre si par une sollicitation de haut en bas la partie haute de la manivelle se déplace vers l'axe du pédalier les rouleaux tombent dans des évasements, après un déplacement rectiligne entre les parois de la lumière et la partie haute pivote vers l'avant de quelques degrés avec pour centre de pivotement le milieu de l'entraxe des rouleaux. Ce déplacement, commandé par le pied, ne devant vaincre que la résistance du ressort de rappel se fait en accélération, ce qui à pour effet de donner une impulsion à la manivelle en donnant un surcroît d'énergie pour l'entraînement du pédalier. En fin de déplacement la partie basse de la demi- manivelle supérieure bute contre des plans inclinés situés en bas de la partie plate rectangulaire de la demi- manivelle basse. La partie supérieure de la manivelle se remet en place en fin de parcours de l'arc compris entre l'horizontale et le point mort bas en apportant une seconde impulsion. A l'encontre des systèmes connus la manivelle diminue de longueur dans la partie active du pédalage.R1 plus grand que R2.

La sensibilité des manivelles au déplacement vertical se règle grâce à des vis ou cames agissant sur la compression des ressorts de rappel. Pour des raisons particulières chaque manivelle peut avoir un tarage différent.Le système de passage du point peut être neutralisé en mettant les ressorts de rappel à spires jointives par l'un des quelconques moyens de réglage des ressort de rappel décrits postérieurement.

Dans le cas ou les lumières qui reçoivent les rouleaux sont taillés dans des inserts métalliques, ces inserts peuvent être interchangeables et devenir des pièces d'usure. Les différentes longueurs de manivelles du commerce peuvent être obtenues en ne changeant que les parties hautes des manivelles.

L'étanchéité au niveau de l'assemblage des demi- manivelles est obtenue grâce à un manchon élastique qui peut aider le ressort de rappel.
- La figure 1 est une vue de face du pédalier selon l'invention, manivelles en position normale par rapport au sol coupes partielles AA et BB suivant la figure 2.
- La figure 2 est une vue de côté du pédalier suivant la figure 1.
- La figure 3 est une vue de face du pédalier, suivant la figure 1, la manivelle étant activée pour le passage du point mort, avec coupes partielles suivant la figure 2.
- La figure 4 est une vue de face du pédalier, suivant la figure 1, montrant la remise en place de la manivelle haute après un passage actif de point mort .
- La figure 5 est une vue de la manivelle gauche non activée, vue côté intérieur au pédalier.
- La figure 6 est une vue de côté de la figure 5.
- La figure 7 est une vue de la manivelle gauche activée vue côté intérieur au pédalier.
- La figure 8 est une coupe CC de la figure 6.

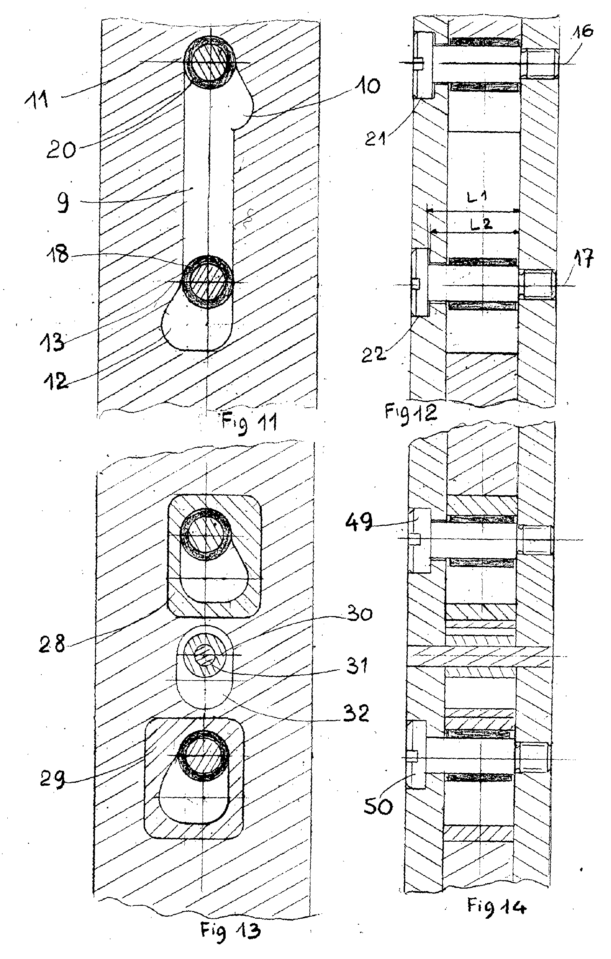

- La figure 9 est une coupe DD de la figure 5.
- La figure 10 est une coupe longitudinale de la manivelle en position active.
- La figure 11 est une vue de face partielle en coupe longitudinale de la manivelle gauche vue coté intérieur au pédalier, montrant les rouleaux positionnés dans la lumière manivelle en position alignée rigide.
- La figure 12 est une vue de coté en coupe de la figure 11.
- La figure 13 est une vue de face partielle en coupe longitudinale de la manivelle gauche vue coté intérieur au pédalier montrant une réalisation de la lumière de guidage à l'aide d'inserts.
- La figure 14 est une vue de coté en coupe de la figure 13.
- La figure 15 est une coupe longitudinale sur un haut de manivelle selon l'invention montrant un système de réglage dureté du ressort de rappel à l'aide d'une vis conique par le coté de la manivelle.
- La figure 16 est une coupe longitudinale montrant un système de réglage dureté du ressort de rappel à l'aide d'une came transversale.
- La figure 17 est une vue de face de la manivelle gauche munie d'un manchon élastique de protection.
- La figure 18 est une vue de face de la demi- manivelle gauche basse montrant la pose de pièces en plastique souple pour atténuer les bruits de butée.
- La figure 19 est une vue suivant la figure 11 montrant les rouleaux dans la lumière, la manivelle étant en position active de passage de point mort.

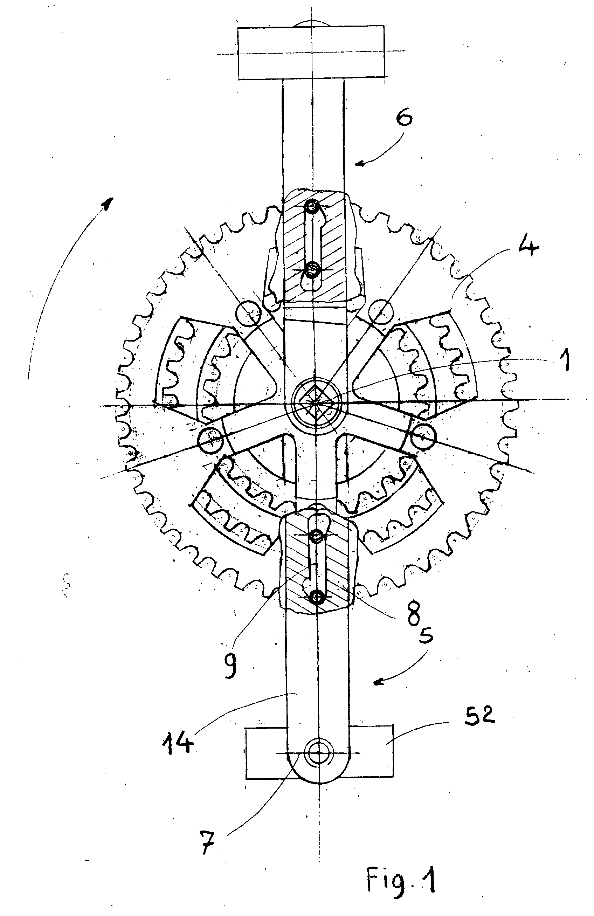

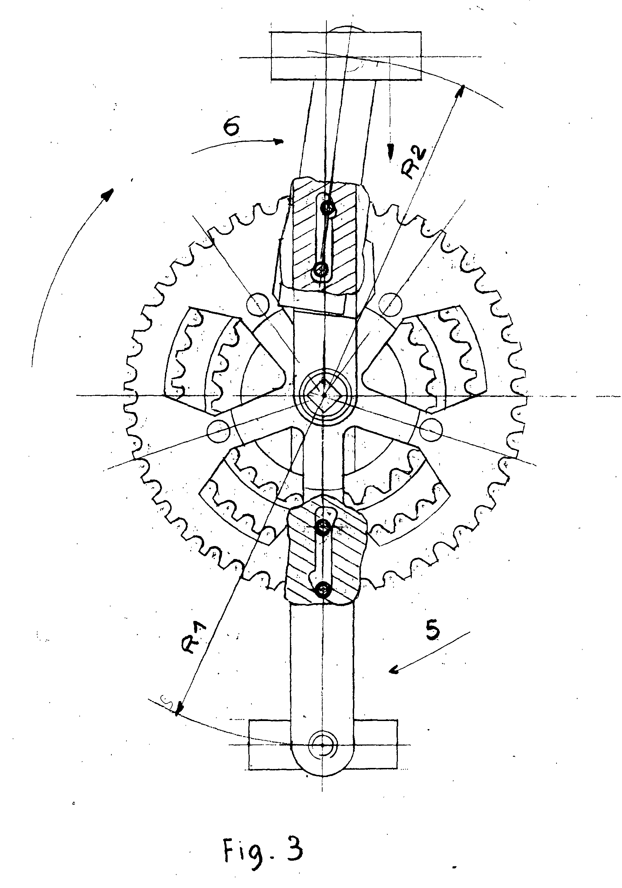

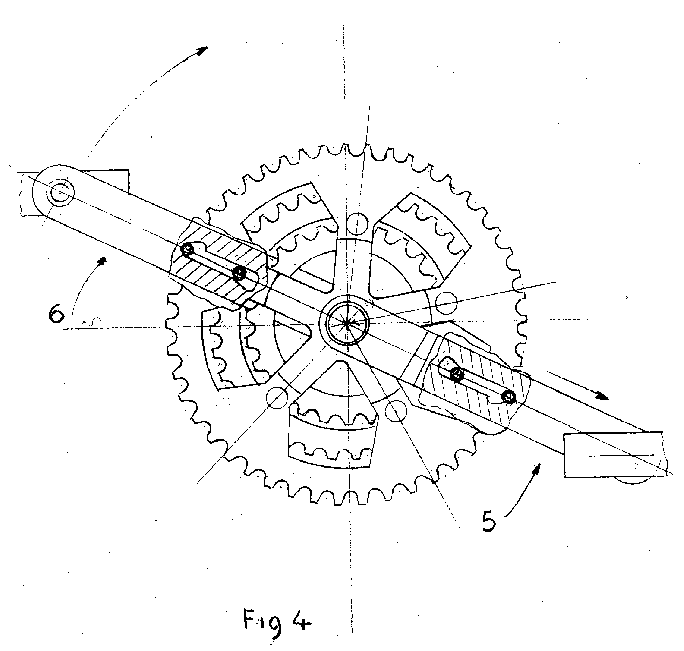

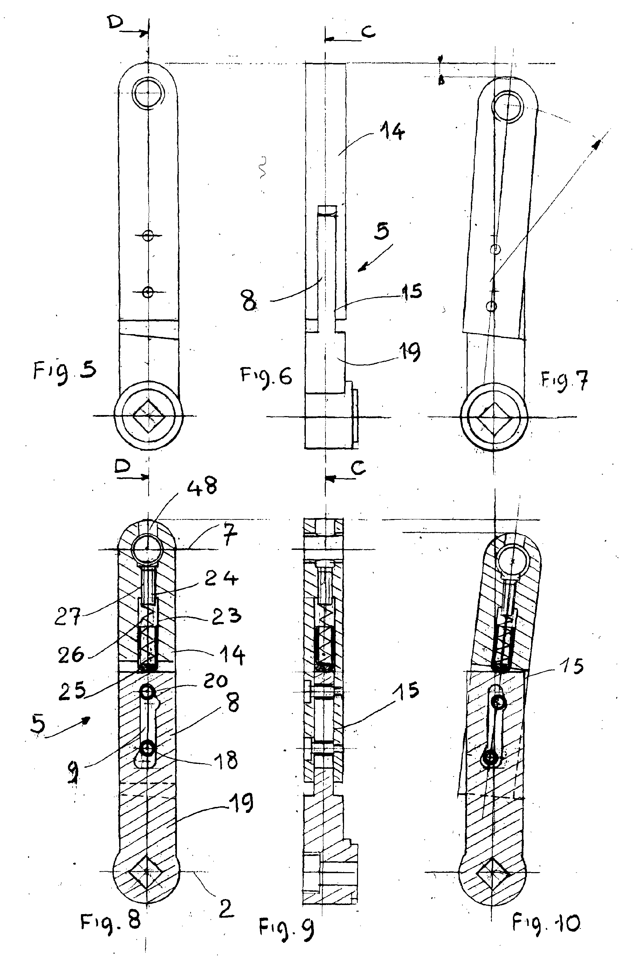

Tel que représenté aux figures 1-2-3-4, le pédalier selon l'invention est monté par les carrés 1 sur l'axe 2 du boîtier de pédalier 3.Les écrous d'immobilisation du pédalier sur les carrés de l'axe du pédalier ainsi que les tubes du cadre de bicyclette ne sont pas représentés. Les plateaux ou roues dentées 4 sont ceux du commerce. La description du système selon l'invention sera celle de la manivelle 5, manivelle gauche en regardant la bicyclette par l'arrière, cette manivelle étant vue coté intérieur au pédalier, en position haute, figure 8.

Cette manivelle est coupée aux 3/5 de sa hauteur environ mesurée entre l'axe 2 du pédalier et l'axe de montage 7 de la pédale. 52. L'épaisseur de la partie haute de la manivelle 19 est réduite symétriquement pour former un plat rectangulaire 8 d'épaisseur égale approximativement à la moitié de l'épaisseur de la manivelle. Une lumière 9 traverse le plat 8 dans sa partie haute. Cette lumière 9, quand on regarde la manivelle coté intérieur, celle-ci étant en position haute, figure 8, descend parallèlement à l'axe longitudinal de la demi- manivelle 19 sur un peu moins que sa hauteur par rapport a l'axe 2. Elle possède un évasement 10, partant à droite, depuis l'axe 11 de la portion semi- circulaire de la partie haute de la lumière, la pente est d'environ 30°,figure 11.La partie basse de la lumière possède un évasement 12, partant à gauche dont le départ 13 de l'angle d'environ 30° également se situe à environ 30 mm de l'axe 11 de la partie semi-circulaire de la lumière, figure 11.la deuxième partie 14 de la manivelle 5 est taillée en chape, 15, dans sa partie basse, dans le sens de l'épaisseur de la manivelle, sur à peu près la moitié de sa hauteur, figure 6. Le plat 8 et la chape 15 sont ajustés de façon à ce que les deux pièces coulissent librement l'une par rapport à l'autre sans jeu, figure 6. Deux trous 16 et 17 ayant comme entraxe celui des départs 11 et 13 des pentes à 30° de la lumière 9 traversent la chape 15, figure 12. Le départ du premier trou 17 se situe à 20 mm environ du bas de la chape.Ces trous 16 et 17 sont taraudés côté intérieur au pédalier et sont lisses avec un lamage côté extérieur. Deux rouleaux 18 et 20 en acier ou plastique sont mis en place dans la lumière 9 aux départs 11 et 13 des pentes donnant les évasements 10 et 12. La partie haute 14 est montée sur le plat 8 de 19 en faisant coïncider les axes 16 et 17 des trous de la chape 15 avec les axes des rouleaux 18 et 20.Deux vis 21 et 22 formant axes pour les rouleaux sont montées sur la chape 15 comme indiqué à la figure 12.Il est à remarquer que la cote L1 mesurée sur une vis doit être légèrement supérieure à la cote L2 donnée par l'épaisseur de 8 plus l'épaisseur d'un côté de la chape diminué de la profondeur du lamage recevant la tête de vis, afin de ne jamais bloquer le coulissement réciproque de 8 et 15 en serrant les vis, figure 12. Les rouleaux 18 et 20 sont moins larges que l'épaisseur de 8. La demi-manivelle 14 est percée dans son axe longitudinal d'un trou débouchant 23, taraudé sur une partie 24.Un piston 25 recevant un ressort de compression 26 est monté dans le trou 23. Une vis de réglage 27 de compression du ressort 26 est montée dans le trou taraudé 24. Le montage du piston et du ressort se fait avant celui des vis 21 et 22. Quand l'ensemble est monté on comprime légèrement le ressort 26 à l'aide de la vis 27 en passant un outil par le trou 48, les demi- manivelles 14 et 19 s'éloignent l'une de l'autre et le rouleau 20 vient en butée contre la partie haute semi-circulaire de la lumière 9, la cote entre les axes 2et 7 devient une cote traditionnelle de manivelle, par exemple 170mm. Un essai de fonctionnement est pratiqué en appuyant verticalement sur le sommet de la manivelle montée. Une résistance élastique, suivie d'un déplacement d'environ 5mm vers le bas en basculant légèrement vers l'avant se produit. L'ensemble se remet très vite en place quand on relâche la pression. Le réglage du ressort 26 à l'aide de la vis 27 sera effectué, après un essai, pédalier monté sur la bicyclette. Ce réglage dépend de la force du cycliste, de son poids, et de la nature du terrain. Pour des raisons particulières les réglages des ressorts peuvent être différents sur les manivelles droite et gauche. En vissant 27 à fond le ressort 26 arrive a spires jointives et la manivelle se comporte comme une manivelle traditionnelle du commerce.

Cette description de fonctionnement de la manivelle 5 s'applique à la manivelle 6 portant l'étoile et les plateaux, mais il faut regarder la manivelle 6côté extérieur au pédalier, la manivelle étant en position haute.

Un autre mode de réalisation des lumières 9 qui dans la description sont taillées dans la masse de la manivelle, figure 11, est représenté aux figures 13 et 14. Des inserts 28 et 29 sont montés dans l'épaisseur du plat 8, soit en acier, soit en matière plastique haute performance. Chaque insert possède une partie active de la lumière 9. Ces inserts peuvent également servir de pièces d'usure remplaçables.

La figure 13 montre également l'utilisation d'une entretoise 30 solidaire de la chape 15 par l'axe 31 et pouvant se déplacer dans un dégagement 32 du plat 8. Cette entretoise 30 permet un bon calibrage en largeur de la chape 15 et il est possible de serrer très fort les vis 49 et 50 sans déformation de la chape.

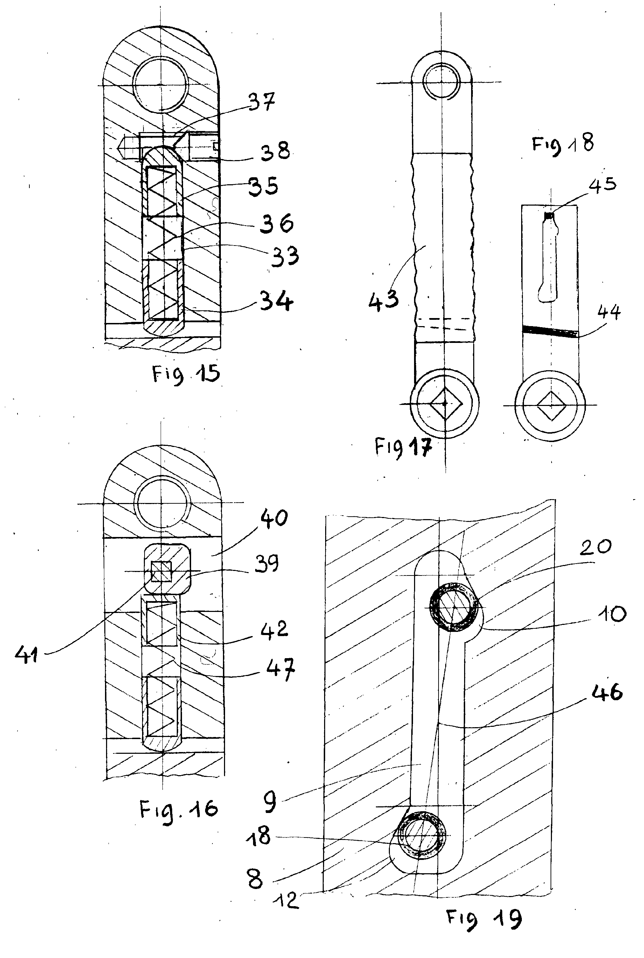

Un autre mode de réalisation du réglage en dureté du ressort est décrit à la figure 15. Un trou lisse 33 non débouchant est percé dans le fond de la chape 15. Il reçoit un premier piston 34, un deuxième piston 35 à tête bombée, et un ressort 36. Un trou taraudé 37 est percé sur le côté de la manivelle perpendiculairement à l'axe du trou 33, il reçoit une vis à tête conique 38 qui agit sur le piston 35 pour donner la bonne compression au ressort

Une solution de réglage par came est décrite à la figure 16. Une came 39 entraînée par un carré 41 débouchant en forme de tête de vis sur la face avant de la manivelle permet de comprimer plus ou moins le ressort 47 par le piston 42.

Ces deux solutions ont l'avantage de pouvoir procéder au réglage des ressorts sans dévisser les pédales 52 comme dans la solution décrite en premier mais celle- ci a l'avantage d'être très simple à réaliser.

Un manchon élastique 43, figure 16, est installé sur chaque manivelle pour assurer l'étanchéité.

Des pièces en matière plastique souple, figure 18, peuvent être placées sur la partie basse des manivelles pour atténuer le bruit quand les pièces en mouvement arrivent en butée. Deux pièces latérales 44 pour atténuer le bruit quand le haut de la manivelle descend et une pièce 45 dans le fond de la lumière 9 quand la manivelle se détend

La figure 19 montre, d'après la figure 11, les rouleaux 18 et 20 en fin de déplacement dans la lumière 9.Il est a remarquer que le centre de basculement 46 de la demi manivelle haute est situé proche du milieu de la lumière 9.

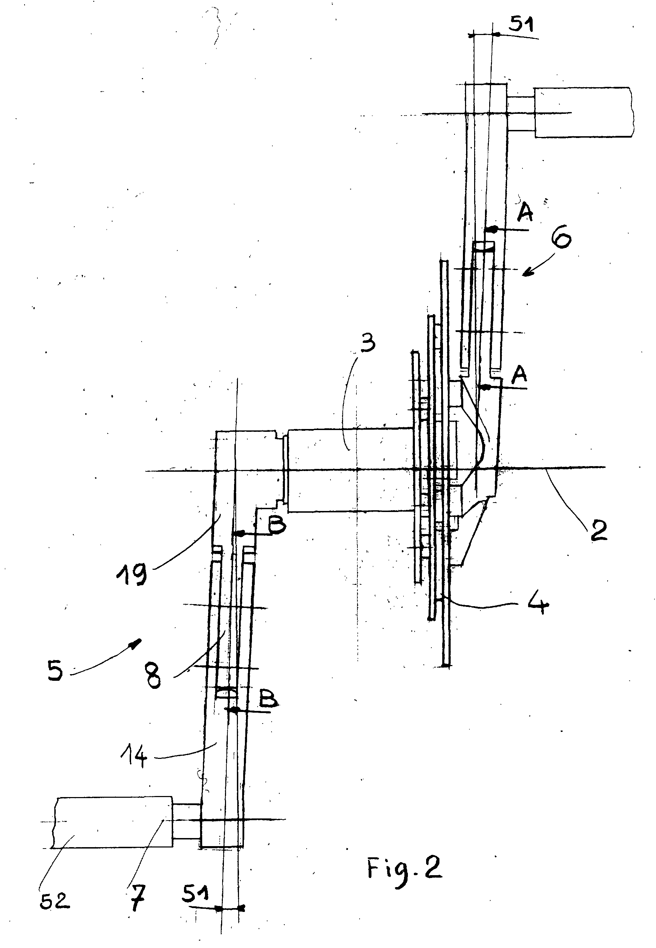

Sur la figure 2 il est montré que les manivelles vues par l'arrière de la bicyclette forment un angle 51 par rapport au plan médian de la bicyclette. Cette angle pour une raison de réalisation des manivelles par rapport au passage de la chaîne et a la partie arrière du cadre de bicyclette peut varier de 0 a 5° suivant les conceptions. L'angle 0° est a privilégier. Les axes des pédales 52 restent toujours parallèles à celui du boîtier de pédalier

L'invention décrite présente un premier intérêt pour l'équipement de VTT et de bicyclette à vocation acrobatique ( équipée d'un seul plateau ).Sur les bicyclettes de route, dans les montées le fait d'un relâchement de l'effort de pédalage pendant une fraction de seconde est un soulagement pour les muscles.

Industriellement il suffit de vendre séparément, en kit, les deux manivelles, ce qui apporte un nouveau débouché à la vente d'accessoires. L'esthétique par rapport à un pédalier normal n'est que très peu modifié, ce qui est très important pour un produit introduit dans un milieu très conservateur.

L'intérêt d'une manivelle à impulsions est grand pour les mécanismes à inertie entraînés par une seule manivelle.

## Revendications

1. Pédalier de bicyclcttc monté sur l'axc (2) du boîtier de pédalicr (3) tournant concentriquement par rapport à celui-ci, la manivelle en étoile (6) portant de façon connue les plateaux (4), les manivelles (5, 6) ayant des cotes d'entraxe traditionnelles entre l'axe des pédales (7) et celui du boîtier de pédalier (2) et se présentant normalement en alignement l'une par rapport à l'autre, **caractérisé en ce que** chaque manivelle (5,6) est divisée en deux parties (14, 19), assemblées coulissantes l'une par rapport à l'autre, et la partie haute (14) portant la pédale (52), pouvant se déplacer parallèlement à son axe et angulairement vers l'avant, en accélération, dans le sens du pédalage, sous l'effet d'une force appliquée perpendiculairement à son axe longitudinal, de haut en bas de manière à réduire (R2) la longueur (R1) de manivelle (5 ou 6) pour passer facilement le point mort haut, quant celui-ci devient un handicap au pédalage.

2. Pédalier de bicyclette selon la revendication 1 **caractérisé en ce que** chaque manivelle (5, 6) comporte un partie basse (19), la manivelle étant considérée en position haute, reliée à l'axe (2) du pédalier, cette partie basse portant un plat (8) qui reçoit une lumière(9), et une partie haute (14), qui porte la pédale (52), conformée en chape (15) dans sa partie basse, qui porte deux vis (21, 22) munies de rouleaux (18, 20) qui coopèrent avec les flancs de la lumière(9) pour son déplacement, par rapport à la partie basse (19), quand le système est activé et pour son maintient rigide quand le système n'est pas sollicité.

3. Pédalier de bicyclette selon les revendications 1,2, **caractérisé en ce que** la demi-manivelle haute (14) est maintenue en place et ramenée en position dans la lumière (9) par un système élastique comportant : un piston (25), un ressort de compression (26), une vis de réglage (27), cette vis servant également à neutraliser le système.

4. Pédalier de bicyclette selon les revendications 1, 2, 3, **caractérisé en ce que** la lumière (9) de la partie (8) de la demi-manivelle basse (19) présente à l'endroit des rouleaux (18, 20) portés par la chape (15) un configuration ajustée ne permettant qu'un déplacement suivant l'axe longitudinal de la manivelle, suivie d'un évasement permettant une rotation de la partie haute (14) de la manivelle par rapport à la partie basse (19).

5. Pédalier de bicyclette selon la revendication 4 **caractérisé en ce que** la lumière (9) portée par le plat (8) de la demi-manivelle basse (19) est sous formes d'inserts remplaçables (28, 29).

6. Pédalier de bicyclette selon la revendication 5 **caractérisé en ce que** la demi-manivelle haute (14) porte une entretoise (30) passant par un évidemment (32) de la demi-manivelle basse (19).

7. Pédalier de bicyclette selon les revendications 1 et 2 **caractérisé en ce que** la demi- manivelle haute (14) est maintenue en place et ramenée en position dans la lumière (9) par un système élastique comprenant un ressort de rappel (36) dont le réglage est obtenu par la combinaison d'un piston à tête arrondie (35) et d'une vis à bout conique (38), dont l'axe est perpendiculaire à celui du piston (35), et qui débouche sur un côté de la demi-manivelle haute (14).

8. Pédalier de bicyclette selon les revendications 1 et 2 **caractérisé en ce que** la demi-manivelle haute (14) est maintenue en place et ramenée en position dans la lumière (9) par un système élastique comprenant un ressort de rappel (47) dont le réglage est obtenu par la combinaison d'un piston à tête plate (42) et d'une came (39) entraînée par un carré (41) débouchant en forme de tête de vis sur la face avant de la manivelle.

9. Pédalier de bicyclette selon les revendications précédentes **caractérisé en ce que** les deux manivelles (5, 6) sont revêtues d'un manchon élastique d'étanchéité (43) recouvrant les parties en mouvement des demi-manivelles(14, 19) l'une par rapport à l'autre.

10. Pédalier de bicyclette selon la revendication 1 **caractérisé en ce que** la demi-manivelle basse (19) est munie de tampons en matière plastique (44, 45) chargés d'atténuer les bruits.
